# EUROPEAN PATENT APPLICATION

(11) **EP 4 714 720 A1**
(43) Date of publication of application: **25.03.2026**
(21) Application number: 25201860.1
(22) Date of filing: 12.09.2025
(51) Int. Cl.: B60L 7/02

(54) **BRAKE CHOPPER RESISTOR SYSTEM AND CONTROL**

(30) Priority: 16.09.2024 US 202463695128 P
(71) Applicant: Cummins Inc., Columbus, IN 47201 (US)
(72) Inventor: Day, Phillip John, Columbus, 47201 (US); Bogel, Bjorn Sebastian, Columbus, 47201 (US); Segets, Andreas, Columbus, 47201 (US)
(74) Representative: Edson, Russell Gregory

(57) **Abstract**

The present disclosure relates to systems, methods and computer program products for thermal management of a brake chopper resistor. The system comprises a resistor housing portion configured to receive a cooling fluid in a cooling fluid flow path; a brake chopper resistor in the resistor housing portion; a plurality of temperature sensors in thermal communication with different respective parts of the resistor cooling flow path through the resistor housing portion and configured to measure a first temperature at a first location in the cooling fluid flow path of the brake chopper resistor and to measure a second temperature at a second location in the cooling fluid flow path of the brake chopper resistor; and control logic, configured to compare the first temperature and/or the second temperature to a threshold value or to compare the first temperature with the second temperature, and to make a determination of whether to allow activation of the brake chopper resistor in response to the comparison with the threshold value.

## Description

### Technical Field

The disclosure relates to a brake chopper system for use in an electrical transmission and braking system. In particular, the disclosure relates to a brake chopper system for electric braking systems for automotive applications.

### Background to the Disclosure

With electrical drivetrains becoming more prevalent in the automotive sector, developments have taken place in both power delivery, and braking in electrical powertrains. Vehicle braking systems can include mechanical, regenerative electrical, and resistive electrical braking. Braking performance in any vehicle and in particular in commercial vehicles, such as those which exceed around seven tons in mass, must be managed closely in certain driving conditions, such as a long downhill braking, which can cause brakes to become overheated and braking performance to become reduced. Mechanical wear on mechanical braking systems can also be significant in these situations.

A brake chopper in an electrical braking system can dissipate excess electrical energy generated when a drive motor acts in generator mode to brake a vehicle. In certain instances, this is done when regenerative braking is no longer practical because, for example an electrical source such as a battery or capacitor for storing electrical energy has reached full capacity. Any improvement in performance of a brake chopper can benefit the overall braking performance of a vehicle.

There exists a need for improvement in brake choppers in electrical braking systems.

### Summary of the Disclosure

### Aspects

### - Integrated Brake Chopper Resistor

An aspect of the disclosure relates to an integrated brake chopper resistor. The integrated brake chopper resistor integrates the power electronics and control systems relating to the brake chopper, with the resistor into which excess electrical power is routed to dissipate electrical energy. In the resistor the electrical energy may be dissipated as thermal energy via a cooling system. The integrated brake chopper resistor is thus a single device, which comprises a resistor for dissipating electrical energy from the drivetrain, and within the same general structure, or within the same unit, or within the same housing, electrical control systems are provided such that the single unit provides functions including one or more of:
- providing an electrical load for dissipating electrical energy, from a motor vehicle, in a resistor;
- providing power electronics to switch the electrical power delivered to the resistor, which may be carried out according to a desired duty cycle;
- providing control electronics for controlling the power electronics to manage the electrical power delivered to the resistor;
- providing cooling to the control electronics and/or the power electronics and/or the electrical resistor.

The cooling may be provided via fluid pathways arranged to guide cooling fluids or liquids through, around or adjacent to electrical components and/or their mounting structures to cool the components.

The resistor may be rated to dissipate between around 100 kW and 200kW, optionally 150 kW of power on a constant basis.

Such systems can provide electrical braking and may provide a heat source for heating. This device may replace the vehicle's mechanical retarder. The device may enable constant electrical braking. The device may reduce wear of mechanical brakes or retarders. Heat generated in the device may be used for delivering heat to other systems of a vehicle, such as a driver or passenger enclosure or other vehicle sub-system.

Other advantages may include: improving vehicle comfort without sacrificing range, for example by generating heat without using battery power; reducing system weight, extending battery lifetime, reducing maintenance of braking components of other systems such as mechanical braking systems.

According to a first aspect, an integrated brake chopper resistor assembly can comprise any or all of the following features:
a. a braking resistor for dissipating electrical power from an electric braking system of a vehicle;
b. power electronics for switching electrical power delivered to the braking resistor;
c. control electronics for controlling the power electronics to switch electrical power delivered to the braking resistor, and optionally for communicating with a control system of a vehicle;
d. a housing assembly enclosing the braking resistor, the power electronics and/or the control electronics as a single unit;
e. a divider disposed within the housing.

The integrated brake chopper resistor may comprise a resistor portion and a control portion.

The resistor portion and the control portion may be assembled together into a single unit.

The resistor portion and the control portion may be enclosed in a common housing.

The divider may be disposed between the power electronics and the control electronics.

The divider may be a heatsink arranged to conduct heat away from components of the assembly.

The housing may comprise a control cooling flow path, arranged to guide a flow of coolant fluid via a heatsink in thermal communication with the power electronics and/or the control electronics.

The control cooling flow path may comprise one or more control cooling flow channels provided in the control housing portion.

### - Resistor Housing Portion

A resistor housing portion may be provided. The resistor housing portion may comprise one or more resistor elements.

The resistor housing portion may comprise a fluid-tight enclosure.

The fluid tight enclosure may be arranged to guide a flow of cooling fluid over, around or via the resistor elements.

The resistor housing portion may include one or more cooling fluid ports arranged to allow cooling fluid to flow into, through and out of the resistor housing portion.

The resistor housing portion may comprise one or more temperature sensors.

The resistor housing portion may comprise a plurality of temperature sensors in thermal communication with different respective parts of a resistor cooling flow path through the resistor housing portion.

A first temperature sensor may be placed at a location nearer to an inlet cooling fluid flow port of the housing than one or more other temperature sensors.

A second temperature sensor may be placed at a location nearer to the outlet cooling fluid flow port than the first temperature sensor.

The braking resistor may be placed on a braking resistor side of the divider and the power electronics may be located on the braking resistor side of the divider.

The power electronics may at least in part to be placed in thermal contact with the divider.

The power electronics may be located between the braking resistor and the divider.

### - Control Housing Portion

The housing may comprise a control cooling flow path, arranged to guide a flow of coolant fluid via a heat sink in thermal communication with power electronics and/or control electronics.

The control cooling flow path may comprise one or more control cooling flow channels provided in the control housing portion.

The control cooling flow channel or channels may be provided as a recess in the control housing portion.

The control electronics may be disposed on a side of the divider opposite to the braking resistor and/or the power electronics.

The control electronics may be accommodated within an enclosure which is substantially separate from the power electronics.

The control cooling flow path may be in thermal communication with the power electronics and with the control electronics.

The divider may form at least a part of the control cooling flow path and may form a divide between the power electronics and the control electronics.

### - Mounting Portions

The housing may include one or more mounting portions, comprising one or more walls and one or more attachment portions, and the attachment portion being together formed from a single piece of material and bent to shape to form the mounting portion.

The housing may be configured such that the device may be mounted to a vehicle via the resistor housing portion, with the control housing portion being mounted to and supported on the resistor housing portion.

### - Strain Relief

The housing may comprise one or more strain relief devices to provide strain relief to one or more cable connectors connecting a high-voltage DC power cable to the brake chopper resistor system.

### - Power electronics

The power electronics may comprise a plurality of electrical phases, such as two phases, three phases or more.

The power electronics may comprise a filter for filtering DC current disposed on DC busbars for connecting the power electronics to a high voltage/DC power system of a vehicle.

The DC link filter may be provided between one or more high voltage connectors and a DC link capacitor of the power electronics.

The power electronics may comprise one or more temperature sensors, arranged to sense a temperature of one or more switching devices of the power electronics.

A plurality of temperature sensors may be provided, for sensing respective temperatures of respective switching devices of the power electronics.

### - Control Electronics

The assembly may comprise control electronics arranged to control the power electronics.

A control connection may be provided, connecting the control electronics to the power electronics and passing from a braking resistor side of the divider or housing to a control side of the divider or housing.

An opening in the divider and/or housing may be provided to allow a control electrical connection between the control side of the divider or housing and the resistor side of the divider or housing.

The control electrical connection may be arranged to transfer electrical power and/or electronic control or data signal connections between the control side of the divider or housing and the resistor side of the divider or housing.

The control electronics and/or the power electronics may comprise a controller, comprising a processor, a memory, and one or more input and/or output interfaces, and may be connected to a vehicle control system and to one or more components of the brake chopper resistor system.

### - Temperature control

According to an aspect, there are provided methods for thermal management in brake chopper resistor systems.

A method for thermal management in a brake chopper resistor system may include measuring a first temperature at a first location in a cooling fluid flow path of a brake chopper resistor, and measuring a second temperature at a second location in a cooling fluid flow path of a brake chopper resistor.

The method may include comparing the first temperature and/or the second temperature to a threshold value and making a determination of whether to allow activation of the brake chopper resistor in response to the comparison with the threshold value.

The method may include comparing the first temperature with the second temperature and making a determination of whether to allow activation of the brake chopper resistor in response to the comparison.

The method may include comparing a difference between the first temperature and the second temperature with a threshold permissible temperature difference.

The method may include generating a signal indicative that the brake chopper resistor is unavailable for use to dissipate power.

The method may include isolating the braking resistor from a high-voltage or DC power system of a vehicle in which the braking resistor is comprised.

The respective temperature comparison or comparisons may be carried out at a hardware level in power electronics of the brake chopper resistor system, or in control electronics of the brake chopper resistor system.

One or more of the temperature comparisons may be carried out in software.

The hardware of the brake chopper resistor system may be configured to disable use of the braking resistor until a signal is received indicative of the measured temperatures being within acceptable ranges.

The acceptable ranges may be defined with respect to an absolute threshold temperature and may further or alternatively be defined with respect to a difference between first and second measured temperatures in cooling fluid flow path of the braking resistor.

### Power derating by resistor module temperature

A further method for thermal management in a brake chopper resistor system may include reducing the amount of power dissipated in a braking resistor of the brake chopper resistor system in response to an absolute temperature measured at the resistor or its cooling flow path.

The method may include reducing the amount of power dissipated in the braking resistor to zero in response to an absolute temperature measured at the resistor or its cooling flow path reaching a maximum operational threshold value.

The method may include partially reducing the amount of power dissipated in the braking resistor in response to an absolute temperature measured at the resistor or its cooling flow path exceeding an intermediate threshold value or a derate threshold value.

The method may include comparing an absolute temperature measured at the resistor or its cooling flow path to a derate threshold value and a maximum operational threshold value, and reducing the amount of power dissipated in the braking resistor by an amount calculated based upon the result of the comparison of the absolute temperature with the derate threshold value and the maximum operational threshold value.

The method may include comparing an absolute temperature measured at the resistor or its cooling flow path to an error threshold which is higher than the maximum operational threshold value.

The method may include shutting down the brake chopper resistor system and/or sending an alert if the measured temperature exceeds the error threshold.

### Control Temperature Monitoring

A further method for thermal management in a brake chopper resistor system may comprise measuring a temperature associated with a control portion of the system, and making a determination on whether to activate the brake chopper resistor system based upon a comparison of the measured temperature with one or more thresholds.

The control portion may be power electronics of the system, or their related cooling flow path.

The comparison may comprise comparing the measured temperature with a minimum threshold temperature below which the brake chopper resistor system is not activated and/or comparing the measured temperature with a maximum threshold temperature above which the brake chopper resistor system is not activated.

The comparison may comprise comparing the measured temperature with a low temperature threshold and the minimum threshold temperature and reducing the amount of power dissipated in the brake chopper resistor based upon the comparison.

The comparison may comprise comparing the measured temperature with a derate temperature threshold and the maximum threshold temperature and reducing the amount of power dissipated in the brake chopper resistor based upon the comparison.

The method may comprise limiting an AC (alternating current) current in a high-voltage part of the system based upon the comparison.

### - Temperature differential monitoring at power electronics

A further method for thermal management in a brake chopper resistor system may comprise measuring a first temperature associated with a switching device of power electronics of the brake chopper resistor system and measuring a second temperature associated with a switching device of power electronics of the brake chopper resistor system.

The method may comprise comparing the first measured temperature and the second measured temperature.

The method may comprise, if a difference between the first measured temperature and the second measured temperature exceeds a threshold value, determining that a cooling issue exists.

The method may comprise limiting operation of the brake chopper resistor system in response to the determination.

The method may comprise generating an alert in response to the determination.

Method may comprise reducing amount of power dissipated in the brake chopper resistor system in response to the determination.

The method may comprise preventing operation of the brake chopper resistor system in response to the determination.

### - Temperature Slew Rate Monitoring

A further method for thermal management in a brake chopper resistor system may comprise monitoring a rate of change of temperature at one or more temperature sensors in the brake chopper resistor system.

The method may comprise monitoring a rate of change of temperature at one or more temperature sensors at a braking resistor of the system.

The method may comprise comparing the monitored rate of change of temperature with a threshold rate of change of temperature.

The method may comprise monitoring for the monitored rate of change of temperature exceeding the threshold rate of change of temperature for a predetermined time.

The method may comprise monitoring for the monitored rate of change of temperature exceeding the threshold rate of change of temperature over a temperature change of a predetermined magnitude.

The method may comprise reducing an amount of power dissipated in the braking resistor if one or more threshold values is exceeded.

The method may comprise shutting down the brake chopper resistor system if one or more threshold values is exceeded.

The method may comprise monitoring a rate of change of temperature at one or more temperature sensors at the power electronics, at the control electronics or at a combination of the power electronics and the control electronics.

Any of the methods described herein may be executed in a hardware controller or in a software controller.

In one aspect, there is provided a hardware controller configured to carry out one or more of the steps of the methods described herein.

In an aspect, there is provided a programmable controller, comprising a processor, a memory, and one or more input and/or output ports, the memory comprising instructions which, when executed by the processor, cause the programmable controller to be configured to execute one or more of the methods as described herein.

In an aspect there is provided a computer program product comprising instructions which, when executed by a computer processor, cause the computer processor to be configured to execute one or more of the methods as described herein.

### Brief Description of the Drawings

Further features and advantages of the present disclosure will become apparent from the following description, presented by way of example only, and by reference to the drawings, in which:
Figure 1 shows the vehicle into which a brake chopper resistor system according to an aspect of the disclosure may be integrated;
Figure 2 shows the vehicle system into which a brake chopper resistor system comprising aspects the disclosure may be integrated;
Figures 3 to 5 show an exploded view of one assembly which can provide various aspects of a brake chopper resistor assembly according to the disclosure;
Figure 6 shows an example of a brake chopper resistor assembly according to the disclosure;
Figure 7 shows a cross-section through a brake chopper resistor according to an aspect of the disclosure;
Figure 8 illustrates a schematic view of a high voltage interface and power electronics for a brake chopper and resistor system as provided in the present disclosure;
Figure 9 shows a control system overview for a brake chopper resistor system according to an aspect of the disclosure;
Figure 10 shows a control logic structure according to an aspect of the disclosure;
Figure 11 illustrates a method of controlling power delivered to the brake resistor is a function of measured temperature.
Figure 12 illustrates a method of controlling current in the brake chopper resistor system is a function of measured temperature.
Figure 13 illustrates a DC filter for use within the systems described.

### Detailed Description

A function of a brake chopper is to dissipate excess electrical energy during regenerative braking into heat. This can be done through a brake resistor. This may be done when the traction voltage batteries in the vehicle are near full state of charge. A further function of providing heating to the vehicle and/or its subsystems can also be provided. A brake chopper can be used in both battery electric vehicles (BEV) and fuel cell electric vehicles (FCEV).

Benefits of employing such a system can include: preventing upsizing of traction battery; replace mechanical braking by electric braking, optionally in the electric traction system; simplifying energy management in an electric powertrain; reduction of local mechanical brakes; improved re-utilisation of braking energy by recovering heat for use in vehicle systems or enclosures for passengers or drivers.

### Sizing of systems and their capacity

One requirement of braking systems is that an endurance braking system shall make it possible to maintain a constant downhill speed over a long period of time without the use of friction brakes. To meet these requirements, an endurance braking system needs to be suitably sized and dimensioned, with a suitable power dissipation and/or storage capacity to enable it to reliably provide suitable braking. One such requirement is that over a distance of 6 km, at a downhill gradient of 7%, the vehicle must be able to maintain a speed of 30 km/h without making use of a mechanical brake. The inventors have understood that, to meet such requirements, for every 10 tons of weight, it is desirable to have around 50 kW of endurance braking power. So for example, a 10 ton vehicle will need around 50 kW of endurance braking power, that 20 ton vehicle may need around a hundred kilowatts of power, while a 40 ton vehicle made require around 200 kW of power. The inventors have found it advantageous to size a unit at around 150 kW of power to enable it to cover the majority of use cases, whilst using multiples of 150 kW can be envisaged for vehicles of higher tonnages, for example over 30 tonnes.

Advantageous unit power dissipation capacities can therefore usefully vary between 10 kW and 200 kW. Optional useful ranges for the power dissipation capacity of a unit may be between 30 kW and 70 kW, and may be between 40 kW and 60 kW. A power dissipation capacity of between 100 kW and 150 kW, or up to 200 kW may also be beneficial.

### Vehicle

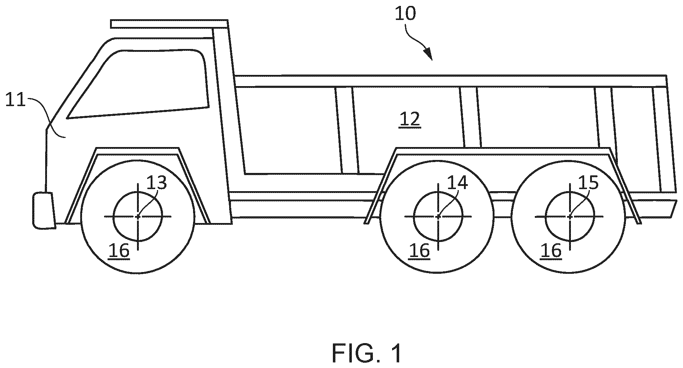

Figure 1 illustrates a vehicle 10 into which a brake chopper system as disclosed herein may be integrated. The vehicle has a cab 11 and may incorporate a cargo or passenger carrying region 12. While Figure 1 illustrates a cargo or passenger-carrying vehicle, the brake chopper resistor of the present disclosure can be incorporated into any suitable type of vehicle. It can be desirable to drive such a vehicle from electric power sources. To achieve this, one or more electric motors may be connected to each wheel 16. An electric motor-generator can be incorporated into or connected to one or more hubs 13, 14, 15 of the vehicle 10 in order to transmit drive from one or more electric motors to a wheel 16. Electric motors may act as motor generators, such that when provided with electrical power they may drive the wheel, while when operated in generator mode, they convert motion from the wheel to electrical power to brake the wheel 16.

### System

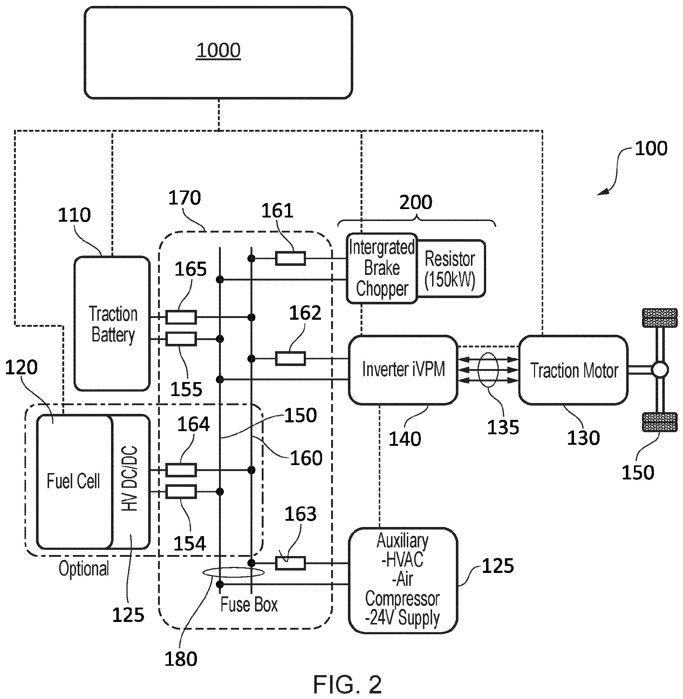

Figure 2 illustrates a schematic view of an architecture of an electric traction and/or braking system 100 which may incorporate a brake chopper resistor sub-system 200 according to the present disclosure. The system 100 may be used to distribute power between one or more of the system components illustrated in figure 2. Items included in the system may include one or more of: a traction battery 110, a fuel cell 120, a high voltage (HV) DC-DC converter; traction motor 130, and inverter 140, one or more auxiliary systems 125. The components may be electrically connected via electrical connections. Electrical connections may comprise a ground circuit 150 and/or a supply circuit 160. The illustrated elements may be connected via a fuse box 170. Any or all of the elements may be connected to ground circuit or bus and/or a supply circuit or bus, via one or more optional fuses, such as those illustrated at 161, 162, 163, 164, 165. Fuses may be supplied on the ground circuit side, for example as shown at 154 and 155. A multi-phase power connection 135 may be provided to connect the inverter 140 and the traction motor 130.

The inverter 140 may convert DC voltage to AC voltage and vice versa to convert AC voltage delivered to and/or generated by the traction motor in its generator and/or motor modes as appropriate, and a DC current distribution circuit. The remaining illustrated components may be connected to the DC power distribution circuit.

Auxiliary systems included in or connected to system 100 may include elements such as one or more of: an air compressor, a HVAC (Heating, Ventilation, and Air Conditioning), a 12 V or 24 V, or other voltage system for supplying power to other vehicle systems.

The brake chopper resistor sub-system 200, can be connected to the DC power distribution circuit and upon demand from a vehicle control system 1000, may be engaged to dissipate excess electrical power on the DC power circuit 180. Data, commands, communications, control signals, and/or any kind of data or control input and/or output may be controlled over a control system 100 of the vehicle, which may be any electrical or wireless communication system employed to control the vehicle's systems. One example with which a skilled reader will be familiar is a CAN bus, and the illustrated components could be placed in communication with such a circuit in the usual manner.

### Brake chopper and resistor assembly

In one aspect of the present disclosure there is provided an integrated brake chopper and resistor assembly, which may be referred to as an integrated brake chopper resistor, or IBCR for short. The integrated assembly integrates power and/or control electronics with a resistor in a single unit and provides improvements to packaging and assembly of such systems.

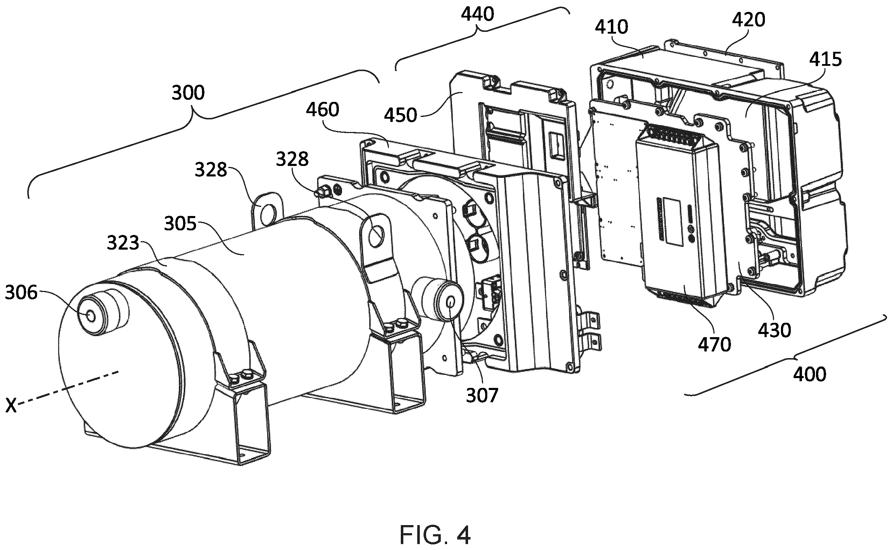

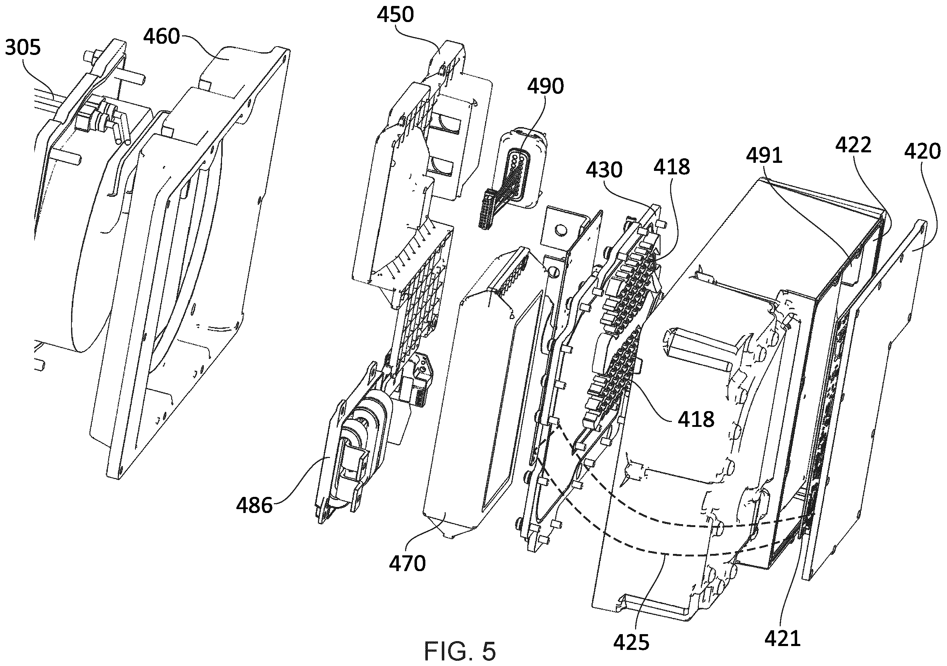

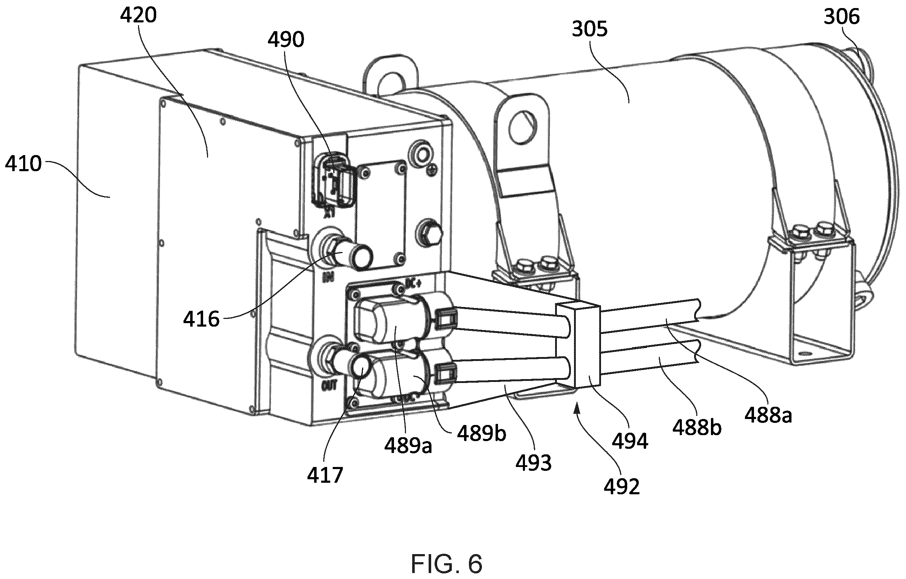

Figures 2 to 5 illustrate an exploded view of a brake chopper and resistor assembly. Figure 6 shows an external view of the assembly in an assembled state. The assembly generally comprises a resistor portion 300 and a control portion 400. The resistor portion 300 and the control portion 400 can be assembled together into a single unit. That is to say that they may be mechanically and fixedly connected together, so that they can be secured to, removed from and assembled into the vehicle or a vehicle subsystem as a single unit. Connections between the resistor portion 300 in the control portion 400 may therefore be fixed and rigid, which for example differs from other systems in which a resistor component is provided separately, with only electrical connections to the control portion, and the control portion is a separate unit, which is assembled and packaged separately, and so the connections between resistor and control system are merely electrical, while any mechanical linkage between them is merely by virtue of a vehicle or vehicle sub system to which they are mounted.

### Housing

The brake chopper and resistor assembly 200 can be enclosed in a housing. The housing may comprise two or more portions. One portion may be a resistor housing portion 305. A further portion may be a control housing portion 410.

The integrated brake chopper resistor assembly can comprise any or all of the following features: a braking resistor 310 for dissipating electrical power from an electric braking system of a vehicle; power electronics 440 for switching electrical power delivered to the braking resistor 310; control electronics 421 for controlling the power electronics 440 to switch electrical power delivered to the braking resistor, and optionally for communicating with a control system of a vehicle; a housing assembly enclosing the braking resistor, the power electronics 440 and/or the control electronics as a single unit; a divider 430 disposed within the housing 305, 410. The divider may be disposed between the power electronics 440 and the control electronics 421.

The divider 430 can act as heatsink and can be arranged to conduct heat away from the power electronics 440 and/or the control electronics 421. The housing may comprise a control cooling flow path 415, arranged to guide a flow of coolant fluid via a heat sink in thermal communication with the power electronics 440 and/or the control electronics. The control cooling flow path may comprise one or more control cooling flow channels 415 provided in the control housing portion 410.

### Mounting portions

The housing may include one or more mounting portions 321, 322. These may be integrally formed with the housing or may be separate to the housing. They may be formed as separate components and attached to the housing via one or more attachment portions 323, such as a strap. The mounting portions may comprise one or more walls 324, 325, and one or more attachment portions 326. One or more of the walls 324, 325 and attachment portion 326 may be together formed from a single piece of material, which can improve the mechanical performance of the mounting portion. This can be advantageous in a vehicle setting, where lifetime vibration performance of the components is generally important, and this, potentially combined with thermal cycling of the components of the brake chopper and resistor assembly, can lead to fatigue, which the inventors have found to be resolved by forming the mounting portions from a single piece of material, rather than welding individual components of it together. The mounting portions may comprise one or more lifting portions 328, arranged to permit lifting of the assembly by a lifting device or devices for installation onto or into a vehicle.

### Strain relief

It can be beneficial to provide strain relief to power or signal cables into or out of the device. This can be particularly beneficial in relation to high voltage power lines, since if these are damaged, their high voltage cores may be exposed. The assembly may therefore be provided with a strain relief arrangement 492 seen in Figure 6. The strain relief arrangement 492 may comprise a bracket 493. A mount or clamp 494 may be provided and may be fixedly mounted to the housing, either directly or via optional bracket 493. This arrangement may retain one or more high-voltage cables 488a and/or 488b and may reduce mechanical strain at high voltage connectors 489a and 489b. In this way, strain damage to the high-voltage cables, in particular at the region of connection of the high-voltage cables to the device, can be reduced.

### Housing - Resistor Portion

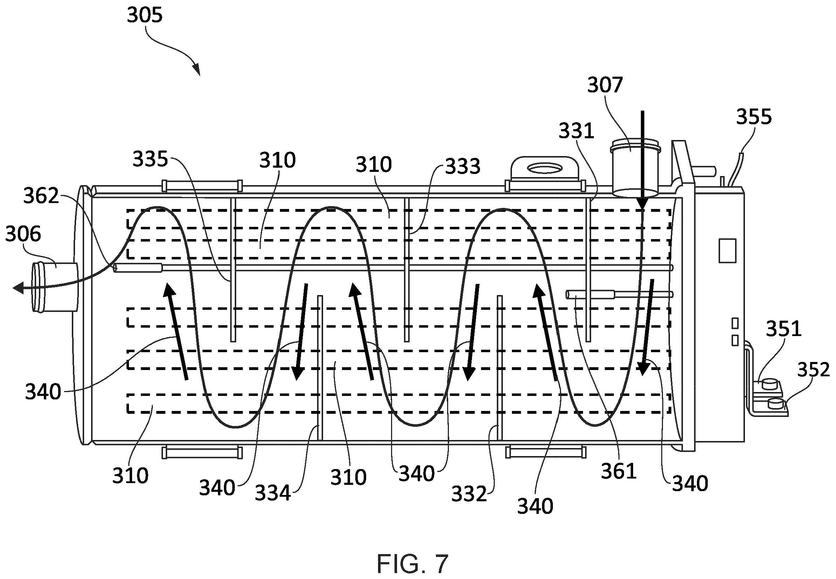

The housing may comprise a resistor housing portion 305. The resistor housing portion 305 may comprise one or more resistor elements 310. The resistor housing portion 305 may enclose the one or more resistor elements 310. The resistor housing portion 305 may include a fluid-tight enclosure, which may be suitable for guiding the flow of cooling fluid (which may be a cooling liquid) over around or via the resistor elements to provide a cooling function. The resistor housing portion 305 may include one or more cooling fluid ports 306, 307, which may be arranged to allow the cooling fluid to flow into, through and out of the resistor housing portion 305. The resistor housing portion 305 is illustrated in cross-section in Figure 7.

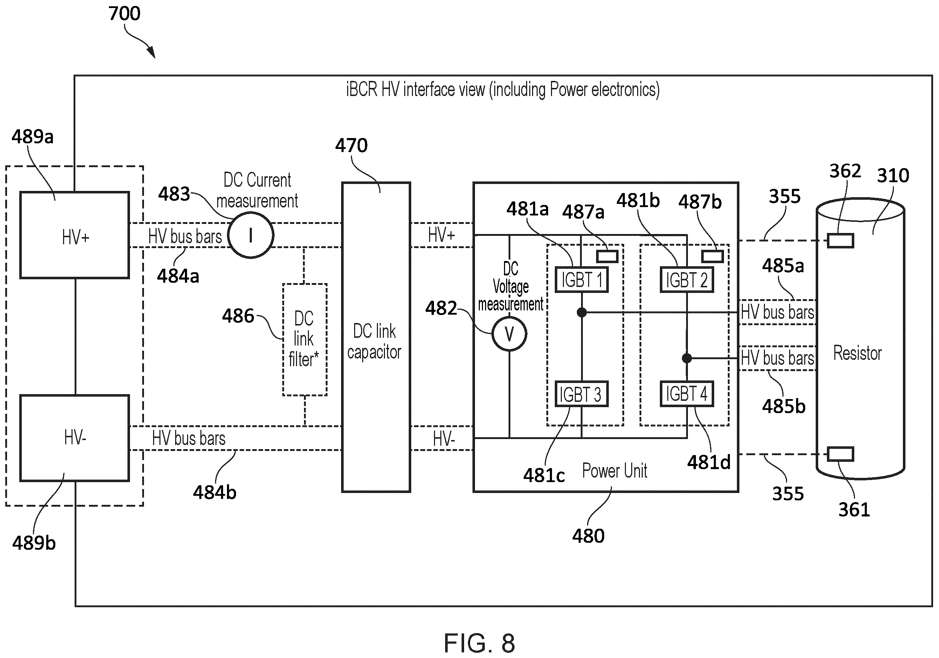

The resistor housing portion 305 may be provided with one or more diaphragms or baffles 331, 332, 333, 334, 335. These may provide structural strength and support to the array of resistors 310 housed in the resistor housing portion 305. These can also act to direct flow in a desired manner through the housing, from the inlet port 307 to the outlet port 306. It can be beneficial for the flow to be directed in an alternating fashion as indicated by arrows 340. Directing the flow in such a meandering, weaving, or alternating flow direction through the housing around the array of resistors 310 can help to provide a more even and uniform cooling to the resistor or resistors 310. Bus bar connectors 351 and 352 may be provided, protruding through the housing for electrical connection of the resistor or resistors 310 to busbars for distribution of current to the resistor by a high voltage power distribution system, such as that illustrated and described in relation to figure 8. One or more resistor control connections 355 may be provided to enable control information, such as signals from sensors in the resistor housing portion 305 to be transferred to a control system, for example.

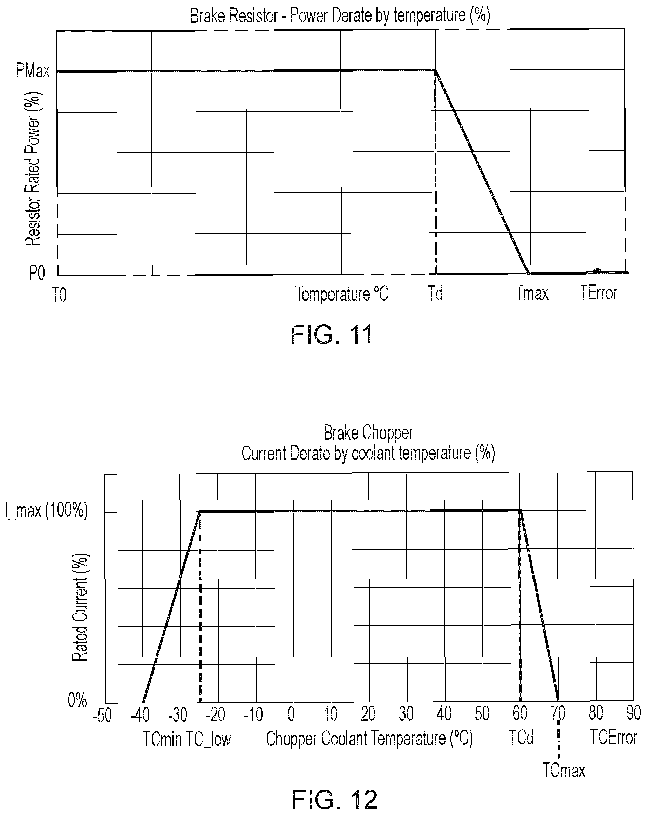

Since the purpose of the resistor or resistors 310 is to dissipate energy as heat, significant amounts of heat are generated in the resistor housing portion 305. The arrangement illustrated provides improved means for managing thermal performance of the system. One or more temperature sensors 361 and/or 362 may be provided to the resistor housing portion 305. The inventors have found it particularly beneficial to provide a plurality of temperature sensors 361, 362 in the resistor housing portion. It has been found beneficial to provide these in thermal communication with different respective parts of the resistor cooling flow path through the resistor housing portion 305. The temperature sensor or sensors 361, 362, may, for example, be placed in, at, near, or in thermal communication with different positions along a cooling flow path through the resistor housing portion 305. In particular, a first temperature sensor or sensors may be placed at a location nearer to the inlet 307 than one or more other temperature sensors. A second temperature sensor or sensors may be placed at a location nearer to the outlet 306 and so may be nearer to the outlet 306 than the first sensor or sensors 361. Operation of the system, taking into account the outputs of these sensors will be described in relation to Figure 11.

### Housing - Control Portion

The divider 430 may be a heatsink arranged to conduct heat away from the power electronics 440 and/or the control electronics. The housing may comprise a control cooling flow path 415, arranged to guide a flow of coolant fluid via a heat sink in thermal communication with the power electronics 440 and/or the control electronics. The control cooling flow path 415 may comprise one or more control cooling flow channels 415 provided in the control housing portion 410.

The control cooling flow path 415 or channels may be provided as a recess 415 in the control housing portion. The control cooling flow path may be formed between the divider or heat sink and one or more channels provided as a recess 415 in the control housing portion 410. The recess 415 may be provided in a wall of the control housing portion 410. The recess 415 may provide a substantially U-shaped flow channel. The control cooling flow path may flow between a control cooling flow path inlet port 416 and a control cooling flow path outlet port 417, which may be located on the housing, and which may be located adjacent one another on the housing.

A braking resistor 310 may be placed on a braking resistor side of the divider 430. The power electronics 440 may be located on the braking resistor side of the divider 430. The power electronics 440 may at least in part to be placed in thermal contact with the divider 430. The thermal contact may enable heat to be conducted away from the power electronics 440 by the divider 430. The divider may act as a heat sink for the power electronics. One or more components of the control housing assembly may act as a heat sink by providing a thermally conductive pathway between one or more components of the power electronics 440 and/or the control electronics and the control cooling flow path 415. The power electronics 440 may be located between the braking resistor and the divider or heatsink 430.

Control electronics 421 may be received in the housing, such as in the control housing portion 410. A control electronics cover 420 may be provided and may enclose the control electronics within the control housing portion 410. The control electronics 421 may be accommodated within an enclosure 422 which is substantially separate from the power electronics. For example, the control electronics 421 may be received in a recess 422 in the control housing portion 410. Enclosure 422 for the control electronics may be in thermal communication with the control cooling flow path 415. The control electronics 421 may be connected to vehicle data systems, such as a CAN bus, via a low-voltage connector, otherwise termed a data connector or a control connector, 490, which may be received in recess 491 and connected to control electronics 421.

The control cooling flow path 415 may be in thermal communication with both an enclosure or recess 422 for the control electronics and/or the control electronics 421 themselves. The control cooling flow path 415 may be in thermal communication with the power electronics. The control cooling flow path 415 may be in thermal communication with the power electronics 440 and with the control electronics 421 or with their respective enclosures. The control cooling flow path 415 may comprise a plurality of fins, channels or protrusions 418 within the flow path to increase heat transfer between a cooling fluid running through the control cooling flow path 415 and the divider 430.

An interface bracket 460 may be provided if necessary, and may provide a function of providing a mechanical interconnection between the resistor housing portion 305 and one or more parts of the control housing portion 410. A retainer plate 450 may be provided to separate power electronics 440 from the resistor 310.

### Power electronics

The power electronics 440 may be a multiphase system. The power electronics 440 may comprise a plurality of phases such as two phases, three phases or more. The power electronics 440 may comprise one or more switching devices 481a to 481d, arranged to switch power to the braking resistor 310. The switching device(s) or relay(s) 481a to 481d may comprise one or more IGBTs (insulated gate bipolar transistor). The one or more IGBTs may switch power to deliver it to the braking resistor via one or more high voltage (HV) busbars 485a, 485b. The power electronics 440 may be or may comprise a direct current (DC) system. The DC system may be a high voltage DC system, configured to operate at voltages in the range of hundreds of volts, for example between 100 V and 2000 V, or between 200 V and 1500 V. Upper and/or lower bounds on the voltage ranges operated in the high-voltage DC system may include 200, 300, 400, 500, 600, 700 750, 800, 850, 900, 950, 1000, 1100, 1200, 1250, 1500 or 2000 V or more. Indeed, any multiple of whole hundreds up to 10 kVA may be beneficial in certain vehicle systems, according to vehicle system design. Such bounds may therefore be usefully defined as useful operating ranges for the high voltage side of the system.

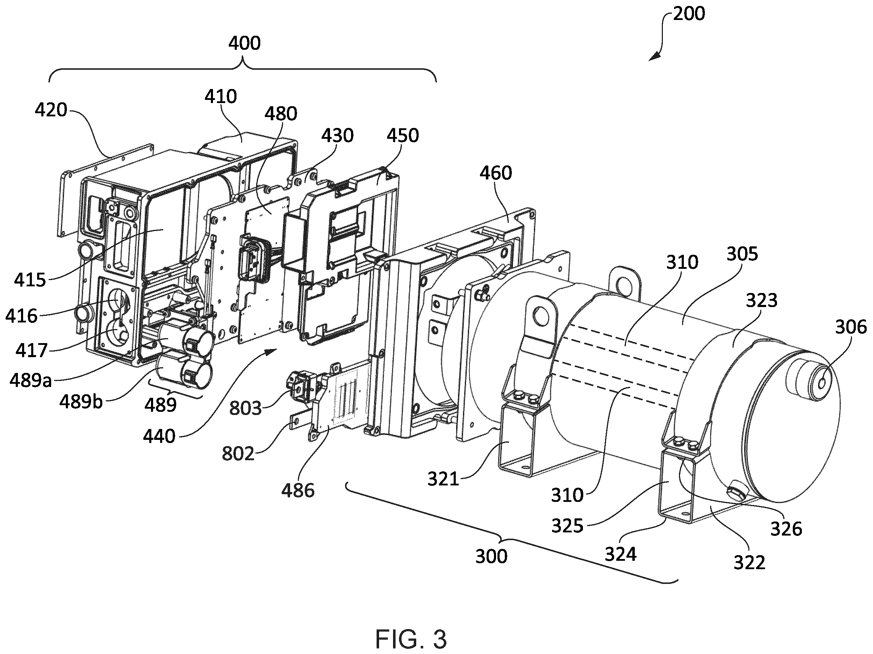

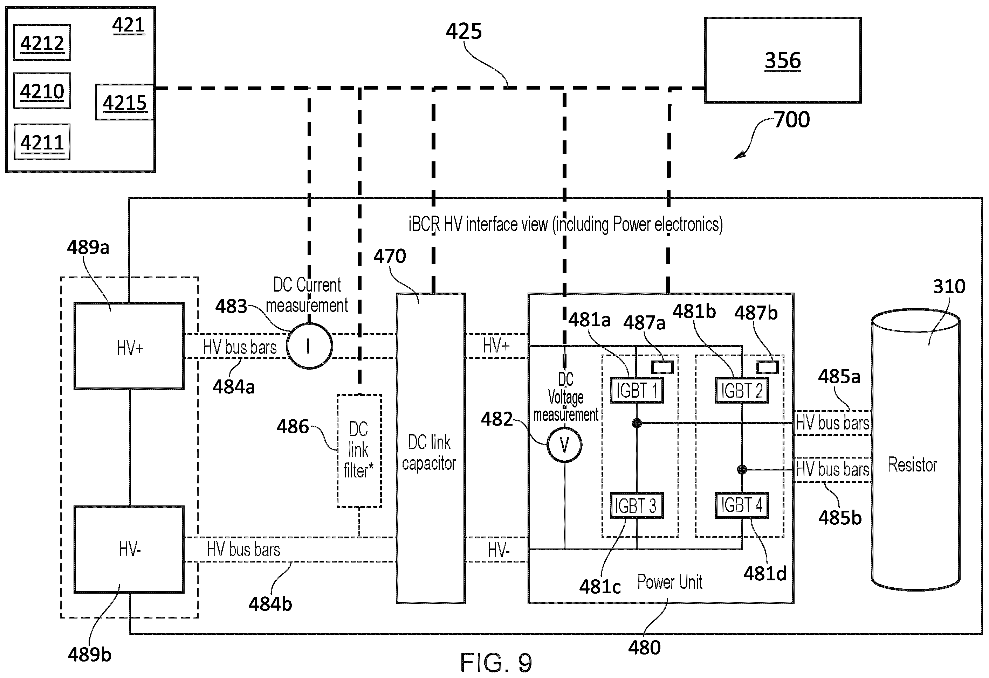

Physical positioning of the power electronics is shown in relation to figures 3 to 5, while logical components of the power electronics are shown schematically in Figures 8 and 9.

Figure 7 shows a schematic representation of the high-voltage/DC interface 700 for the brake chopper and resistor system in one example. The interface comprises a high voltage interface 489 comprising one or more high voltage connectors 489a and 489b. The high-voltage connectors are connected to high voltage busbars, such as a positive high voltage bus bar 484a and a negative high-voltage bus bar 484b. A current sensor 483 for DC current measurement may be provided on at least one of the high-voltage busbars, such as on the positive high-voltage bus bar 484a.

A DC link filter 486 may be provided. The DC link filter may be provided between one or more of the high-voltage connectors 489a and 489b and a DC link capacitor 470. The DC link filter can provide a signal damping function to smooth noise out of the DC voltages on the high-voltage busbars. The DC filter can reduce the effect of noise generated within the brake chopper resistor system on components both within and outside of the brake chopper resistor system, and can further reduce its effects on other vehicle systems to which it may be connected. Such noise may be generated by switching of the switching relays, such as IGBTs 481a to 481d, in the power unit 480, for example. A further advantage of providing the resistor and power electronics with the control electronics in a single system is that they can be self-contained and a single DC link filter arrangement, provided at the single high-voltage interface, can provide a noise filtering function for the whole resistor and control system. This is an advantage compared to systems having separate components connected by HV cables, which may propagate noise more readily through their HV interfaces between different components, or otherwise require more numerous and/or complex filtering provisions.

The provision of noise filtering may also provide for simpler, easier, or more accurate DC current measurement via current sensor 483. DC voltage measurement may be provided at a location between the high voltage bus bars. Such a sensor 482 may be provided, for example, between the DC link capacitor 470 and the array of switching relays 481a to 481d. The switching of the switching relays, such as IGBTs, to deliver power to the resistor 310 is carried out in known ways through the usual duty cycle. This is used in known brake resistor chopper systems and so is not described in detail here, in the interests of efficiency of the disclosure.

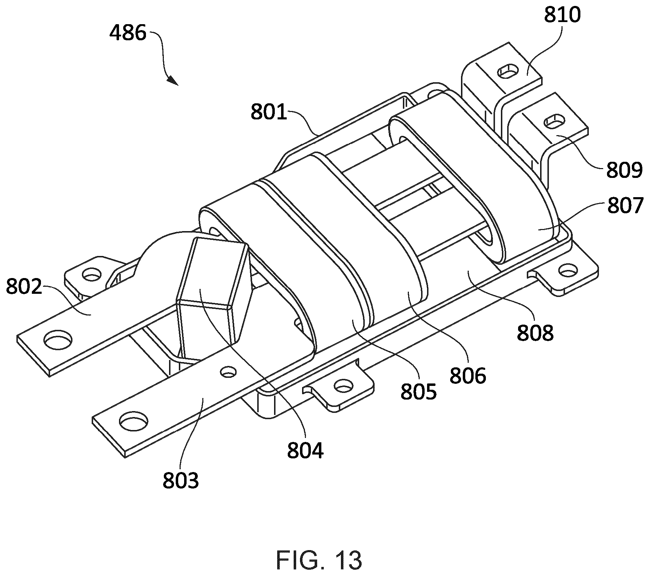

One example of a DC filter 486 which may be provided for the system is illustrated in figure 13. Internal components are shown for the purposes of illustration, although the internal components may be enclosed in a casing, which may have a base portion 801, and a cover portion (not shown), which may pair with the base portion 801 to enclose the components within a filter housing. The filter may comprise busbars 802, 803, one of which may be connected as a negative conductor of the DC part of the control electronics, while the other may connected as a positive conductor of the DC part of the control electronics. The DC filter 486 may be mounted in the system, so that high voltage connectors 489a and 489b may be connected to input ends 802 and 803 of the respective busbars of the filter. Output ends 809 and 810 can be electrically connected to switching devices of the power electronics, such as IGBTs 481a, 481b, 481c, 481d discussed herein, and on to the brake resistor 310 via the switching circuitry. The filter may comprise one or more, or a plurality as illustrated, of filter cores 805, 806, 807. The filter 486 may use a combination of inductance of the filter cores 805, 806 and/or 807, and a capacitance provided by a capacitor or capacitors 804 to provide low-pass filtering in line with the usual principles of inductance-capacitance filter design. In this manner, low frequency electrical signals are allowed to pass along the busbars 802 and 803, while high frequency signals are filtered by the filter arrangement, and are grounded, optionally via the housing or its base portion 801. Housing including its base portion 801 may comprise or be made from a conductive material such as a metal, and may comprise aluminium. To provide the necessary electrical connections between the filter cores 805, 806 and 807, and the housing having base portion 801, and the capacitor 804, communications conductors, such as a Printed Circuit Board (PCB) 808 may be provided. Design and construction of DC filters is known to persons skilled in that area and so further detail of the construction of the filter 486 is not provided here in the interests of the efficiency of the disclosure.

### Control Electronics

The assembly may comprise control electronics 421 arranged to control the power electronics 440. The control electronics 421 may control the power electronics 440. The control electronics 421 may control the power electronics 440 by methods including providing switching control signals to the relay switches or relays, such as IGBTs 481a to 481d. Feedback signals may be received at the control electronics from the power electronics. A control connection 425 may be provided, connecting the control electronics 421 to the power electronics 440. The control connection may pass from a braking resistor side of the divider 430 or housing to a control side of the divider or housing. An opening in the divider and/or housing may be provided for this purpose, to allow electrical power and/or electronic control or data signal connections to pass between the control side of the divider or housing and the resistor side of the divider or housing.

The control electronics may be received in the control housing portion 410. A control electronics cover 420 may be provided and may enclose the control electronics 421 within the control housing portion 410, optionally within a cavity, enclosure or recess 422.

Figure 9 further illustrates examples of control connections 425 between control electronics 421, power electronics and the high-voltage interface 700 of the system. Signals may thus be sent and received between the any of the components of the control electronics 421 and any of the components of the high-voltage interface system, as illustrated in figure 9, to facilitate transfer of power, control signal and/or data exchange to implement the monitoring and control methods and schemes as describe herein.

Control signals may also be received from and optionally sent to control components in the resistor housing portion, such as, for example, the one or more temperature sensors 361 and/or 362, via resistor control connection 355 or 356. These may be passed directly to the power electronics, and/or to the control electronics or both.

### Temperature Control

The inventors have devised novel systems and processes for thermal management in brake chopper resistor systems, as will be described in the following.

As has been described, a plurality of temperature sensors 361, 362 is provided in the resistor housing portion 305 to detect the temperature of cooling fluid in the resistor cooling flow path. A measurement of the absolute temperature detected by one or the other of these temperature sensors can provide control information for temperature management of the device. It has further been appreciated by the inventors that a difference between these temperatures measured by these devices can also provide useful information for management of the operation of the brake chopper resistor system.

Various indications from the temperature sensors can be used to shut down the brake chopper resistor to prevent overheating of the device.

### Resistor Sensor Absolute Temperature

In one aspect of a control scheme an absolute temperature measured in the resistor housing portion 305 is monitored. This may be a temperature of coolant flowing in the resistor housing portion. In an aspect, if this measured temperature exceeds a threshold value, then the power electronics 440 and/or the control electronics 421 may cease operation of the brake chopper resistor, and/or may issue an alarm signal to vehicle systems to indicate that the brake chopper resistor is unavailable.

### Resistor Sensor Temperature Differential

In a further aspect, a difference between temperatures measured by the plural temperature sensors in the resistor housing portion may be measured. If the difference exceeds a certain value, then it may indicate either deficient cooling or excessive heat generation and a possible risk of damage or malfunction due to excess temperatures. Therefore, if the difference between temperatures measured exceeds a threshold value, then the power electronics 440 and/or the control electronics 421 may cease operation of the brake chopper resistor and/or may issue an alarm signal to vehicle systems to indicate that the brake chopper resistor is unavailable for use to dissipate power.

### Hardware or Software Control Logic

Since it is desirable to avoid uncontrolled heat generation in the resistor 310, the inventors have identified it as desirable to implement this control logic at a low level in the device, so that it is not dependent on software or software controllers to determine whether this type of threshold is being exceeded. Threshold monitoring of outputs of the temperature sensors 361, 362 in the resistor housing portion 305 can be implemented in hardware in the power unit 480, or optionally in the control electronics 421. This may increase the reliability of this type of temperature-based shutdown function. The function may be implemented such that the system will not function to deliver power to the resistor unless a positive "OK" signal is generated by the power electronics or the control electronics.

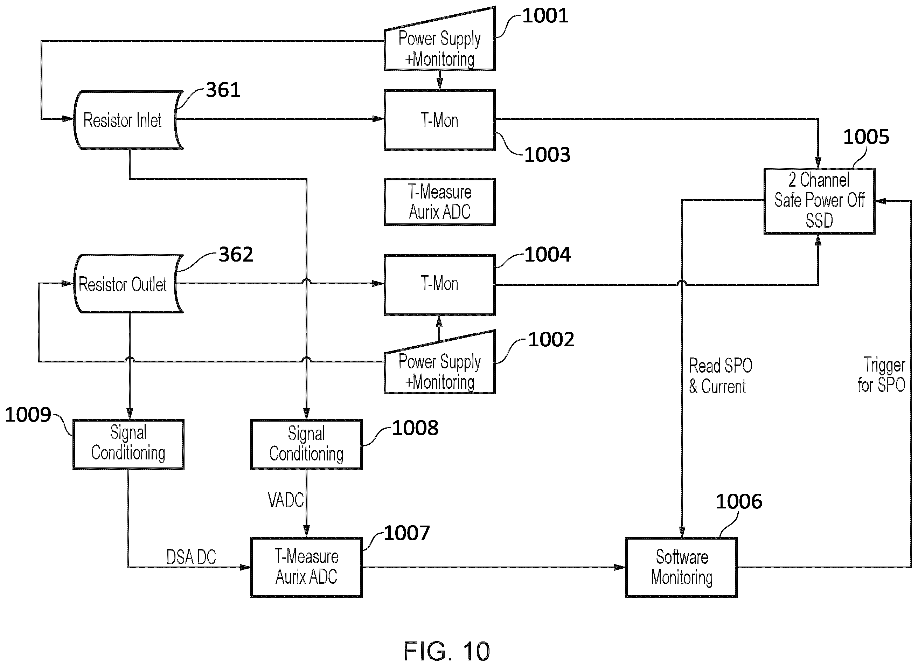

A logical representation of such control is illustrated in figure 10. Blocks 361 and 362 represent temperature sensors in the system. Logical blocks 1001 to 1009 represent control logic which may be built in hardware or programmed into software.

Block 1001 provides power supply and monitoring to a first temperature sensor 361, which may be a temperature sensor at an inlet of the cooling flow channel of the resistor housing portion 305. An output of the temperature sensor is provided to block 1003 for monitoring the temperature output. Similar power supply and monitoring can be provided by block 1002 for a second or further temperature sensor 362, which may be a temperature sensor located toward an outlet end of the cooling flow channel in the resistor housing portion 305.

Outputs of the temperature sensor or sensors may be monitored in temperature monitoring blocks 1003 and 1004 and may be passed on to a comparator 1005. This may be a two-channel safe power-off (SPO) device and may be programmed, configured or hardcoded to provide a power-off signal in the absence of satisfactory output signals from the temperature monitoring blocks 1003 and/or 1004. In one example the SPO arrangement may contain circuitry hard wired to ensure that if the sensed temperature exceeds a first threshold value or condition, the IBGTs cannot be operated until the temperature has dropped below the first threshold once more, or has dropped below a second threshold value lower than the first threshold. For example, the IGBTs may be disabled if the measured temperature exceeds a first threshold value of, for example, 130 degrees centigrade, and the IGBTs may be prevented from operating again until the sensed temperature drops below 117 degrees as an example of a second threshold value.

The criteria defined may be an indication of an absolute temperature being below a preset threshold value from either or both of the temperature monitoring blocks 1003 and 1004. The condition may include a difference between signals provided by temperature monitoring blocks 1003 and 1004 being less than a threshold value or within a predefined range. If criteria for satisfactory functionality are not satisfied, then the block 1005 may not provide an OK signal to software monitoring block 1006. The control logic may be configured such that an absence of this OK signal may prevent the brake chopper resistor from operating to receive power and deliver it to the resistor or resistors 310. Other feeds of the resistor signals may be passed via one or more signal conditioning blocks 1008 and 1009 and passed to a measurement block 1007, which may monitor other properties of the temperatures, for example the absolute values with respect to a threshold. Block 1005 may therefore handle comparing a difference between the respective temperature sensor signals, while block 1007 may be a further comparator which compares the output or outputs from the temperature sensor or sensors 361 and/or 362 to one or more threshold values, and provides a suitable output to software monitoring block 1006.

### Power Derating by Resistor Module Temperature

A further aspect of temperature related control which can be implemented in brake chopper resistor systems is illustrated in figure 11. In the control scheme illustrated by figure 11, when an absolute temperature measured at the brake resistor is considered to exceed a certain threshold temperature, the power delivered to the resistor is de-rated by the control system by a preset or calculated amount.

To illustrate this control scheme, the resistor rated power as a percentage of the maximum power allowed to be dissipated in the resistor is shown on the vertical axis. On the horizontal axis a representation of an absolute temperature measured at the resistor, or the resistor housing portion, such as in a cooling flow path of the resistor housing portion, is shown.

The control scheme illustrated and described can be implemented in software or hardware in the power electronics or in the control electronics. As can be seen, while the temperature is in an acceptable operating range, for example between T0 and Td, the resistor rated power remains at Pmax, meaning that the resistor can be operated at up to its maximum capacity to dissipate energy in the resistor on demand from the control electronics and/or a vehicle control system.

If the temperature exceeds a certain temperature threshold Td, then the resistor rated power as a percentage of Pmax can be reduced, to reduce the amount of energy dissipated and related heat generated, in the resistor. In the illustrated scheme, there is a linear reduction in the rated power permitted to be dissipated in the resistor, up to a maximum temperature Tmax. If the temperature reaches the temperature Tmax, then the amount of power permitted to be dissipated in the resistor is 0%. In other terms, the resistor is unavailable for use to dissipate to power and other braking means must be employed by the connected vehicle's systems. The reduction in power dissipation between Td and Tmax illustrated in figure 11 is a linear one. It will be appreciated that other forms of curve could be employed, depending upon a desired reduction in rated power as a percentage of Pmax based upon the actual measured temperature. Other forms of curve, such as an exponential reduction, or a stepped rate of reduction, or a rate of reduction increasing, or otherwise varying with temperature measured, may be employed as required.

A further threshold measured temperature TError may be defined. This temperature may be a temperature at which it is determined that a fundamental thermal issue has been identified with the resistor. This may provide a signal to vehicle control systems that further action beyond ceasing to use the resistor is necessary. For example emergency warnings may be issued, requests to shutdown certain vehicle systems may be made, or otherwise to bring the vehicle to a halt. Secondary thermal management systems, such as additional cooling or precautionary isolation measures may be implemented in response to an indication that the temperature TError has been reached.

The control scheme above may be implemented based upon temperatures measured in the resistor portion 300 of the system.

The power electronics may further be configured to and/or control electronics provides data updates to the vehicle systems of any of the above events taking place, such as threshold reached or the degree of derating applied.

### Control Temperature Monitoring

The same or similar control schemes can be implemented by monitoring temperatures in the control portion 400 of the housing. For example, a temperature in the housing or of a control coolant in the control cooling flow path 415 can be monitored. This can be employed to improve thermal management in the power electronics or in the control electronics, to prevent thermal damage or performance degradation to those components due to excessive temperatures. Minimum and/or maximum temperature limits for operation of the power electronics can be implemented. AC current limiting or derating by control coolant temperature may therefore be implemented.

In some examples the control system can be configured to reduce the maximum AC output current of the control electronics from the nominal AC current when the control coolant temperature exceeds a threshold value and/or when it is less than a minimum value. An example is illustrated in figure 12, in which the vertical axis shows the rated current as a percentage of the maximum nominal AC current on the vertical axis, and the horizontal axis shows a measured temperature at the control portion 400 of the housing, for example in the control cooling flow path 415. As can be seen in the figure, control may be implemented such that below a minimum threshold value of the measured temperature, such as TCmin, the current is derated to zero.

A lower limit for 100% rating of the AC current may be set at TC_low. Between TC_low and down to TCmin, the rated current percentage may be reduced. The rated current percentage may be reduced in a linear fashion as illustrated in the graph, or may be reduced at a greater rate the lower the temperature falls, and/or the closer the temperature gets to TCmin. Other reduction curves may be used as desired. Between a lower threshold TC_low and an upper threshold TCd, the AC current may be rated at 100% or the highest nominal AC current rating permitted, I_max. This may be considered a normal operational temperature range for the power and/or control electronics.

An upper temperature threshold for normal operation at 100% of the nominal AC current rating, I_max, may be defined at TCd. If the temperature exceeds temperature threshold TCd, then the rated AC current as a percentage of I_max can be reduced, to reduce the amount of energy dissipated and related heat generated in the power electronics. In the illustrated scheme, there is a linear reduction in the rated AC current permitted, up to a maximum temperature TCmax. If the temperature reaches the temperature TCmax, then the amount of AC current permitted in the power electronics is 0%. In other terms, the brake chopper system is unavailable for use to dissipate power and other braking means must be employed by the vehicle systems. The reduction in AC current permitted between TCd and Tmax illustrated in figure 12 is a linear one. It will be appreciated that other forms of curve could be employed depending upon a desired reduction in AC current as a percentage of I_max based upon the actual measured temperature. Other forms of curve, such as an exponential reduction, or a rate of reduction increasing or otherwise varying with temperature measured may be employed as required.

A further threshold measured temperature TCError may be defined. This temperature may be a temperature at which it is determined that a fundamental thermal issue has been identified with the power electronics or the control electronics. This may provide a signal to vehicle control systems that further action beyond ceasing to use the resistor is necessary. For example, emergency warnings may be issued, requests to shutdown certain vehicle systems may be made, or otherwise to bring the vehicle to a halt. Secondary thermal management systems, such as additional cooling or precautionary isolation measures may be implemented in response to an indication that the temperature TError has been reached.

### Temperature differential monitoring at power electronics

In a further temperature management scheme, outputs of temperature sensors 487a, 487b provided at a plurality of switching or relay devices 481a to 481d may be provided.

The inventors have identified that since the components of the power electronics 440 are exposed to the same current as one another and have substantially the same resistance, they should produce substantially the same amount of thermal energy. If they are subject to the same degree of cooling from a comparable flow of coolant fluid through the heat sink 430 adjacent to their position, then their temperatures should be substantially the same, or within a predefined margin of error Mc. The inventors have identified that an excessive differential in temperature measured at one switching device in the power electronics as compared to another switching device in the power electronics, could indicate a lack of coolant flow at the power electronics. This could represent a blockage or air bubble in the coolant system.

An alert can therefore be generated if a temperature differential in excess of Mc, between temperature sensors associated with different switching devices in the power electronics, is detected. The alert may be passed to the vehicle system to alert an operator or an entity responsible for maintenance of the system of vehicle, or both. The system may be shut down or otherwise rendered unavailable to the vehicle systems for dissipation of energy in response to the condition being satisfied. The resistor power dissipation, or AC current rating, may also be derated in response to the alert, or in response to the magnitude of the temperature differential, according to one or more of the principles described in relation to the control temperature monitoring described above.

### Temperature Slew Rate Monitoring

In a further aspect, a rate of change of temperature at one or more temperature sensors in the system, may be monitored. The rate of change of temperature may be termed a temperature slew rate. The temperature slew rates may be monitored at the resistor, at the power electronics, at the control electronics or at any combination of these. It may be pertinent to monitor the temperature slew rate at the resistor, since this is where the greatest amount of power is dissipated and therefore where the greatest amount of heat is generated. The effects of an excessive temperature slew rate may therefore be greatest at the resistor and so it may be advantageous to monitor the temperature slew rate at the resistor.

A predefined threshold slew rate can be set and stored, for example as a number of degrees centigrade per second. The temperature at a temperature sensor can therefore be monitored for its rate of change, or slew rate. If the rate of change exceeds the threshold slew rate, a temperature slew rate alert may be generated. The temperature slew rate alert may be generated only if the temperature slew rate is exceeded for a predetermined amount of time, or over a predetermined temperature range.

If normal coolant flow is present, temperature slew rates should be within normal operating parameters. The effect of the current flow is that the rate of change of temperature in the system should not increase beyond a set amount for the level of power being dissipated in the system. The slew rate may be set based upon the maximum rated power of the system. Therefore, if a rate of change of temperature is detected that is higher than the maximum expected rate of change of temperature in the system under normal operating conditions, optionally over a predetermined range of temperature or time, it can be determined that normal cooling is not taking place. This could be indicative of problems with the quality of the cooling, which could be related to coolant flow, coolant composition, or even the presence of coolant or its absence from the system. Any of these factors may have the potential to lead to thermal management issues in the system and potential damage. Therefore, in response to the temperature slew rate alert, the system may be de-rated to zero power dissipation, or de-rated to zero AC current dissipation, or the system may be fully shut down and an alert may be delivered to the vehicle systems to initiate suitable changes to the operation of the vehicle in response to the temperature slew rate alert. Any response by the system to the temperature slew rate threshold being exceeded, or the magnitude of the temperature slew rate, may be similar to or the same as those described in relation to the monitoring of any of the temperature sensors described in relation to the resistor or the power electronics or the control electronics above.

The power electronics and/or control electronics may further be configured to provide data updates to the vehicle systems of any of the above events taking place, such as threshold is reached or the degree of derating applied.

### Control Hardware

For implementation of the above temperature control schemes, software and/or hardware can be configured to carry out the described comparisons of measured temperatures, temperature differentials and other variables described, with predefined thresholds or other control parameters.

These can be implemented in an electronic controller, such as in control electronics 421, in logical blocks such as illustrated in figure 10, or within the power electronics 440 or power unit 480.

As illustrated in relation to the control electronics 421 in figure 9, control electronics 421 may include a memory 4211 and one or more processors 4210 configured to execute instructions stored in the memory 4211. The control electronics 421 may communicate with the power electronics 480 and or other systems via input and/or output ports 4215. The controller control electronics may comprise a programmable logic controller (PLC). The PLC may include the processor 4210 and memory 4211. The processor 4210 can be configured to receive signals from input devices (such as sensors) and make decisions based on a program stored in the memory 4211 to control devices such as the power electronics 440. The memory 4211 may store instructions that are executable by the processor 4210 to perform any of the operations, methods or control schemes described herein.

Parameters such as thresholds and defined responses may be stored in memory 4211, which may be a random access memory (RAM), or other non-transitory computer readable medium such as long-term computer storage memory. Such values may be accessed by the controller and compared with real-time signals being received from one or more temperature sensors of the system, and such signals and comparisons may be carried out as described above to implement the described control logic and methods. A hardware and/or software control system can therefore be provided which is configured and arranged to carry out any or all of the monitoring, control and communication methods described herein. Computer program products may further be created, containing instructions which, when executed by a processor, cause the processor and/or a system of which the processor forms a part, to carry out any or all steps of the control schemes and/or methods described herein.

Any output or alert generated may be communicated to the vehicle system to alert an operator or an entity responsible for maintenance of the system of vehicle, or both. Inputs and outputs of the system may be recorded in vehicle logs.

All methods and schemes described herein may be beneficial to brake chopper resistors which are provided in integrated form with integrated power electronics and control electronics as described here in. However, aspects of temperature monitoring in the different parts of the system described may be implemented independently of other parts of the system described herein. Each of the features described herein may be provided in combination in a single product, system, assembly, or device. However, separate hardware or software-based control systems may be provided for use with hardware elements of the system and created and defined separately from them. Similarly, hardware elements of the system may be produced and defined separately from hardware or software-based control aspects of the system.

Various modifications, whether by way of addition, deletion and/or substitution, may be made to all of the above-described aspects to provide further aspects and combinations, any and/or all of which are intended to be encompassed by the present disclosure.

### Numbered aspects

By way of non-limiting example, some aspects of the disclosure are set out in the following numbered clauses.

Numbered Clause 1. A system for thermal management of a brake chopper resistor, comprising:
a resistor housing portion configured to receive a cooling fluid in a cooling fluid flow path;
a brake chopper resistor in the resistor housing portion;
a plurality of temperature sensors in thermal communication with different respective parts of the resistor cooling flow path through the resistor housing portion and configured to measure a first temperature at a first location in the cooling fluid flow path of the brake chopper resistor and to measure a second temperature at a second location in the cooling fluid flow path of the brake chopper resistor; and
control logic, configured to compare the first temperature and/or the second temperature to a threshold value or to compare the first temperature with the second temperature, and to make a determination of whether to allow activation of the brake chopper resistor in response to the comparison with the threshold value.

Numbered Clause 2. The system according to Numbered Clause 1, wherein the plurality of temperature sensors comprises a first temperature sensor and a second temperature sensor, the first temperature sensor being placed at a location nearer to an inlet of the cooling fluid flow path of the resistor housing portion than the second temperature sensor.

Numbered Clause 3. The system according to Numbered Clause 1 or 2, wherein the control logic is implemented in hardware, optionally wherein the hardware comprises power electronics or control electronics of a brake chopper resistor system comprising the brake chopper resistor.

Numbered Clause 4. The system according to Numbered Clause 3, wherein the hardware is configured to disable use of the brake chopper resistor until a signal is received indicative of the measured temperatures being within acceptable ranges.

Numbered Clause 5. The system according to Numbered Clause 4, wherein the acceptable ranges are defined with respect to an absolute threshold temperature and/or defined with respect to a difference between first and second measured temperatures in the cooling fluid flow path of the brake chopper resistor.

Numbered Clause 6. A method for thermal management of a brake chopper resistor system, comprising:
measuring a first temperature at a first location in a cooling fluid flow path of a brake chopper resistor, and
measuring a second temperature at a second location in a cooling fluid flow path of a brake chopper resistor.

Numbered Clause 7. The method according to Numbered Clause 6, further comprising:
comparing the first temperature and/or the second temperature to a threshold value and making a determination of whether to allow activation of the brake chopper resistor in response to the comparison with the threshold value.

Numbered Clause 8. The method according to Numbered Clause 6 or 7, further comprising:
comparing the first temperature with the second temperature and making a determination of whether to allow activation of the brake chopper resistor in response to the comparison.

Numbered Clause 9. The method according to any of Numbered Clauses 6 to 8, further comprising:
comparing a difference between the first temperature and the second temperature with a threshold permissible temperature difference.

Numbered Clause 10. The method according to any of Numbered Clauses 6 to 9, further comprising:
generating a signal indicative that the brake chopper resistor is unavailable for use to dissipate power.

Numbered Clause 11. The method according to any of Numbered Clauses 6 to 10, further comprising:
isolating the brake chopper resistor from a high-voltage or DC power system of a vehicle in which the brake chopper resistor is comprised.

Numbered Clause 12. The method according to any of Numbered Clauses 6 to 11, further comprising disabling, using hardware, use of the brake chopper resistor until a signal is received indicative of the measured temperatures being within acceptable ranges. Numbered Clause 13. The method according to Numbered Clause 12, wherein the acceptable ranges is defined with respect to an absolute threshold temperature and/or defined with respect to a difference between first and second measured temperatures in the cooling fluid flow path of the brake chopper resistor.

Numbered Clause 14. The method according to any of Numbered Clauses 6 to 13, further comprising reducing an amount of power dissipated in the brake chopper resistor in response to an absolute temperature measured at the resistor or its cooling flow path.

Numbered Clause 15. The method according to Numbered Clause 14, further comprising reducing the amount of power dissipated in the brake chopper resistor to zero in response to an absolute temperature measured at the resistor or its cooling flow path reaching a maximum operational threshold value.

Numbered Clause 16. The method according to Numbered Clause 14 or 15, further comprising partially reducing the amount of power dissipated in the brake chopper resistor in response to an absolute temperature measured at the brake chopper resistor or its cooling flow path exceeding an intermediate threshold value or a derate threshold value.

Numbered Clause 17. The method according to any of Numbered Clauses 14 to 16, further comprising comparing an absolute temperature measured at the brake chopper resistor or its cooling flow path to a derate threshold value and a maximum operational threshold value, and reducing the amount of power dissipated in the brake chopper resistor by an amount calculated based upon the result of the comparison of the absolute temperature with the derate threshold value and the maximum operational threshold value.

Numbered Clause 18. The method according to Numbered Clause 17, further comprising comparing an absolute temperature measured at the brake chopper resistor or its cooling flow path to an error threshold which is higher than the maximum operational threshold value.

Numbered Clause 19. The method according to Numbered Clause 18, further comprising shutting down the brake chopper resistor system and/or sending an alert if the measured temperature exceeds the error threshold.

Numbered Clause 20. A method for thermal management of a brake chopper resistor system or the method of any of Numbered Clauses 6 to 19, comprising:
measuring a temperature associated with a control portion of the brake chopper resistor system, and
making a determination on whether to activate the brake chopper resistor system based upon a comparison of the measured temperature with a threshold value.

Numbered Clause 21. The method according to Numbered Clause 20, wherein the control portion comprises power electronics of the system or their related cooling flow path.

Numbered Clause 22. The method according to Numbered Clause 20 or 21, further comprising:
comparing the measured temperature with a minimum threshold temperature below which the brake chopper resistor system is not activated and/or comparing the measured temperature with a maximum threshold temperature above which the brake chopper resistor system is not activated.

Numbered Clause 23. The method according to cl Numbered Clause 22, further comprising:
comparing the measured temperature with a low temperature threshold and the minimum threshold temperature and reducing the amount of power dissipated in the brake chopper resistor based upon the comparison.

Numbered Clause 24. The method according to Numbered Clause 22 or 23, further comprising:
comparing the measured temperature with a derate temperature threshold and the maximum threshold temperature and reducing the amount of power dissipated in the brake chopper resistor based upon the comparison.

Numbered Clause 25. The method according to any of Numbered Clauses 20 to 24, further comprising:
limiting an AC (alternating current) current in a high-voltage part of the system based upon the comparison.

Numbered Clause 26. The method according to any of Numbered Clauses 6 to 25, further comprising monitoring a rate of change of temperature at one or more temperature sensors in the brake chopper resistor system.

Numbered Clause 27. The method according to Numbered Clause 26, further comprising comparing the monitored rate of change of temperature with a threshold rate of change of temperature.

Numbered Clause 28. The method according to Numbered Clause 27, further comprising monitoring for the monitored rate of change of temperature exceeding the threshold rate of change of temperature for a predetermined time.

Numbered Clause 29. The method according to any of Numbered Clauses 26 to 28, further comprising monitoring for the monitored rate of change of temperature exceeding the threshold rate of change of temperature over a temperature change of a predetermined magnitude.

Numbered Clause 30. The method according to any of Numbered Clauses 26 to 29, further comprising reducing an amount of power dissipated in the brake chopper resistor if one or more threshold values is exceeded.

Numbered Clause 31. The method according to any of Numbered Clauses 26 to 30, further comprising shutting down the brake chopper resistor system if one or more threshold values is exceeded.

Numbered Clause 32. The method according to any of Numbered Clauses 26 to 31, further comprising monitoring a rate of change of temperature at one or more temperature sensors at the power electronics, at the control electronics or at a combination of the power electronics and the control electronics.

Numbered Clause 33. A computer program product comprising instructions which, when executed by a computer processor, cause the computer processor to be configured to execute the method of any of Numbered Clauses 6 to 32.

Numbered Clause 34. A controller configured to carry out one or more of the steps of the methods of any of Numbered Clauses 6 to 32, wherein the controller is a hardware controller; or wherein the controller is a programmable controller comprising a processor, a memory, and one or more input and/or output ports, the memory comprising instructions which, when executed by the processor, cause the programmable controller to be configured to execute one or more of the methods of any of Numbered Clauses 6 to 32.

### - Integrated Brake Chopper Resistor Assembly

Numbered clause 35. An integrated brake chopper resistor assembly comprising:
a. a braking resistor for dissipating electrical power from an electric braking system of a vehicle;
b. power electronics for switching electrical power delivered to the braking resistor;
c. control electronics for controlling the power electronics to switch electrical power delivered to the braking resistor, and optionally for communicating with a control system of a vehicle;
d. a housing assembly enclosing the braking resistor, the power electronics and/or the control electronics as a single unit;
e. a divider disposed within the housing.

Numbered clause 36. The integrated brake chopper resistor of numbered clause 35 comprising a resistor portion and a control portion.

Numbered clause 37. The integrated brake chopper resistor of numbered clause 35, wherein the resistor portion and the control portion are assembled together into a single unit.

Numbered clause 38. The integrated brake chopper resistor of numbered clause 36, wherein the resistor portion and the control portion are enclosed in a common housing.

Numbered clause 39. The integrated brake chopper resistor of any of numbered clauses 35 to 37, the divider being disposed between the power electronics and the control electronics.

Numbered clause 40. The integrated brake chopper resistor of numbered clause 35 93, wherein the divider provides a heatsink arranged to conduct heat away from components of the assembly.

Numbered clause 41. The integrated brake chopper resistor of any of numbered clauses 35 to 40, wherein the housing comprises a control cooling flow path, arranged to guide a flow of coolant fluid via a heatsink in thermal communication with the power electronics and/or the control electronics.

Numbered clause 42. The integrated brake chopper resistor of numbered clause 41, wherein the control cooling flow path comprises one or more control cooling flow channels provided in the control housing portion.

### - Resistor Housing Portion

Numbered clause 43. The integrated brake chopper resistor of any of numbered clauses 35 to 42, wherein the housing comprises a resistor housing portion comprising one or more resistor elements.

Numbered clause 44. The integrated brake chopper resistor of numbered clause 43, wherein the resistor housing portion comprises a fluid-tight enclosure.

Numbered clause 45. The integrated brake chopper resistor of any of numbered clauses 43 to 44, wherein the fluid tight enclosure is arranged to guide a flow of cooling fluid over, around or via the resistor elements.

Numbered clause 46. The integrated brake chopper resistor of any of numbered clauses 43 to 45, wherein the resistor housing portion includes one or more cooling fluid ports arranged to allow cooling fluid to flow into, through and out of the resistor housing portion.

Numbered clause 47. The integrated brake chopper resistor of any of numbered clauses 43 to 46, wherein the resistor housing portion comprises one or more temperature sensors.

Numbered clause 48. The integrated brake chopper resistor of any of numbered clauses 43 to 47, wherein the resistor housing portion comprises a plurality of temperature sensors in thermal communication with different respective parts of a resistor cooling flow path through the resistor housing portion.

Numbered clause 49. The integrated brake chopper resistor of numbered clause 48, wherein a first temperature sensor is placed at a location nearer to an inlet cooling fluid flow port of the housing than one or more other temperature sensors.

Numbered clause 50. The integrated brake chopper resistor of numbered clause 49, wherein a second temperature sensor is placed at a location nearer to the outlet cooling fluid flow port than the first temperature sensor.

Numbered clause 51. The integrated brake chopper resistor of any of numbered clauses 35 to 50, wherein the braking resistor is placed on a braking resistor side of the divider and the power electronics are located on the braking resistor side of the divider.

Numbered clause 52. The integrated brake chopper resistor of any of numbered clauses 35 to 51, wherein the power electronics are at least in part placed in thermal contact with the divider.

### - Control Housing Portion

Numbered clause 53. The integrated brake chopper resistor of any of numbered clauses 35 to 52, wherein the housing assembly comprises a control cooling flow path, arranged to guide a flow of coolant fluid via a heat sink in thermal communication with power electronics and/or control electronics.

Numbered clause 54. The integrated brake chopper resistor of numbered clause 53, wherein the control cooling flow path comprises one or more control cooling flow channels provided in the control housing portion.

Numbered clause 55. The integrated brake chopper resistor of numbered clause 54, wherein the control cooling flow channel or channels is or are provided as a recess in the control housing portion.

Numbered clause 56. The integrated brake chopper resistor of any of numbered clauses 35 to 55, wherein the control electronics are disposed on a side of the divider opposite to the braking resistor and/or the power electronics.

Numbered clause 57. The integrated brake chopper resistor of any of numbered clauses 35 to 56, wherein the control electronics are accommodated within an enclosure which is substantially separate from the power electronics.

Numbered clause 58. The integrated brake chopper resistor of any of numbered clauses 53 to 57, wherein the control cooling flow path is in thermal communication with the power electronics and with the control electronics.

Numbered clause 59. The integrated brake chopper resistor of any of numbered clauses 53 to 58, wherein the divider forms at least a part of the control cooling flow path and optionally forms a divide between the power electronics and the control electronics.

### - Mounting Portions

Numbered clause 60. The integrated brake chopper resistor of any of numbered clauses 35 to 59, wherein the housing assembly includes one or more mounting portions, comprising one or more walls and one or more attachment portions, and the attachment portion being together formed from a single piece of material and bent to shape to form the mounting portion.

Numbered clause 61. The integrated brake chopper resistor of any of numbered clauses 35 to 60, the housing assembly being configured such that the integrated brake chopper resistor may be mounted to a vehicle via the resistor housing portion, with the control housing portion being mounted to and supported on the resistor housing portion.

### - Strain Relief

Numbered clause 62. The integrated brake chopper resistor of any of numbered clauses 35 to 61, the housing assembly comprising one or more strain relief devices to provide strain relief to one or more cable connectors connecting a high-voltage DC power cable to the brake chopper resistor system.

### - Power electronics

Numbered clause 63. The integrated brake chopper resistor of any of numbered clauses 35 to 62, the power electronics comprising a plurality of electrical phases, such as two phases, three phases or more.

Numbered clause 64. The integrated brake chopper resistor of any of numbered clauses 35 to 63, the power electronics comprising a filter for filtering DC current, disposed on DC busbars for connecting the power electronics to a high voltage/DC power system of a vehicle.

Numbered clause 65. The integrated brake chopper resistor of any of numbered clauses 35 to 64, the DC link filter being provided between one or more high voltage connectors and a DC link capacitor of the power electronics.

Numbered clause 66. The integrated brake chopper resistor of any of numbered clauses 35 to 65, the power electronics comprising one or more temperature sensors, arranged to sense a temperature of one or more switching devices of the power electronics.

Numbered clause 67. The integrated brake chopper resistor of numbered clause 66, comprising a plurality of temperature sensors, for sensing respective temperatures of respective switching devices of the power electronics.

### - Control Electronics

Numbered clause 68. The integrated brake chopper resistor of any of numbered clauses 35 to 67, the control electronics being arranged to control the power electronics.

Numbered clause 69. The integrated brake chopper resistor of any of numbered clauses 35 to 68, further comprising a control connection, connecting the control electronics to the power electronics and passing from a braking resistor side of the divider or housing to a control side of the divider or housing.

Numbered clause 70. The integrated brake chopper resistor of any of numbered clauses 35 to 69, further comprising an opening in the divider and/or housing, arranged to allow a control electrical connection between the control side of the divider or housing and the resistor side of the divider or housing.

Numbered clause 71. The integrated brake chopper resistor of any of numbered clauses 69 or 70, wherein the control electrical connection is arranged to transfer electrical power and/or electronic control or data signal connections, between the control side of the divider or housing and the resistor side of the divider or housing.

Numbered clause 72. The integrated brake chopper resistor of any of numbered clauses 35 to 71, wherein the control electronics and/or the power electronics comprise a controller, comprising a processor, a memory, and one or more input and/or output interfaces, and are optionally connected to a vehicle control system and to one or more components of the brake chopper resistor system.

### - Temperature differential monitoring at power electronics

Numbered clause 73. A method for thermal management in a brake chopper resistor system, comprising:
measuring a first temperature associated with a switching device of power electronics of the brake chopper resistor system; and
measuring a second temperature associated with a switching device of power electronics of the brake chopper resistor system.

Numbered clause 74. The method of numbered clause 73, further comprising comparing the first measured temperature and the second measured temperature.

Numbered clause 75. The method of numbered clause 74, further comprising, if a difference between the first measured temperature and the second measured temperature exceeds a threshold value, determining that a cooling issue exists.

Numbered clause 76. The method of numbered clause 75, further comprising limiting operation of the brake chopper resistor system in response to the determination.

Numbered clause 77. The method of numbered clause 75 or 76, further comprising generating an alert in response to the determination.

Numbered clause 78. The method of any of numbered clauses 75 to 77, further comprising reducing an amount of power dissipated in the brake chopper resistor system in response to the determination.

Numbered clause 79. The method of any of numbered clauses 75 to 78, further comprising preventing operation of the brake chopper resistor system in response to the determination.

Numbered clause 80. A programmable controller, comprising a processor, a memory, and one or more input and/or output ports, the memory comprising instructions which, when executed by the processor, cause the programmable controller to be configured to execute one or more of the methods of numbered clauses 6 to 32, or 73 to 79.

Numbered clause 81. A computer program product comprising instructions which, when executed by a computer processor, cause the computer processor to be configured to execute one or more of the methods of numbered clauses 6 to 32, or 73 to 79.

## Claims

1. A system for thermal management of a brake chopper resistor, comprising:
a resistor housing portion configured to receive a cooling fluid in a cooling fluid flow path;
a brake chopper resistor in the resistor housing portion;
a plurality of temperature sensors in thermal communication with different respective parts of the resistor cooling flow path through the resistor housing portion and configured to measure a first temperature at a first location in the cooling fluid flow path of the brake chopper resistor and to measure a second temperature at a second location in the cooling fluid flow path of the brake chopper resistor; and
control logic, configured to compare the first temperature and/or the second temperature to a threshold value or to compare the first temperature with the second temperature, and to make a determination of whether to allow activation of the brake chopper resistor in response to the comparison with the threshold value.

2. The system according to claim 1, wherein the plurality of temperature sensors comprises a first temperature sensor and a second temperature sensor, the first temperature sensor being placed at a location nearer to an inlet of the cooling fluid flow path of the resistor housing portion than the second temperature sensor.

3. The system according to claim 1 or 2, wherein the control logic is implemented in hardware, optionally wherein the hardware comprises power electronics or control electronics of a brake chopper resistor system comprising the brake chopper resistor.

4. The system according to claim 3, wherein the hardware is configured to disable use of the brake chopper resistor until a signal is received indicative of the measured temperatures being within acceptable ranges, preferably wherein the acceptable ranges are defined with respect to an absolute threshold temperature and/or defined with respect to a difference between first and second measured temperatures in the cooling fluid flow path of the brake chopper resistor.

5. A method for thermal management of a brake chopper resistor system, comprising:
measuring a first temperature at a first location in a cooling fluid flow path of a brake chopper resistor, and
measuring a second temperature at a second location in a cooling fluid flow path of a brake chopper resistor.

6. The method according to claim 5, further comprising:
comparing the first temperature and/or the second temperature to a threshold value and making a determination of whether to allow activation of the brake chopper resistor in response to the comparison with the threshold value.

7. The method according to claim 5 or 6, further comprising:
comparing the first temperature with the second temperature and making a determination of whether to allow activation of the brake chopper resistor in response to the comparison.

8. The method according to any of claims 5 to 7, further comprising:
comparing a difference between the first temperature and the second temperature with a threshold permissible temperature difference.

9. The method according to any of claims 5 to 8, further comprising disabling, using hardware, use of the brake chopper resistor until a signal is received indicative of the measured temperatures being within acceptable ranges, preferably wherein the acceptable ranges is defined with respect to an absolute threshold temperature and/or defined with respect to a difference between first and second measured temperatures in the cooling fluid flow path of the brake chopper resistor.

10. The method according to any of claims 5 to 9, further comprising reducing an amount of power dissipated in the brake chopper resistor in response to an absolute temperature measured at the resistor or its cooling flow path, preferably in response to an absolute temperature measured at the resistor or its cooling flow path reaching a maximum operational threshold value.

11. The method of any of claims 5 to 10, further comprising:
measuring a temperature associated with a control portion of the brake chopper resistor system, and
making a determination on whether to activate the brake chopper resistor system based upon a comparison of the measured temperature with a threshold value, preferably wherein the control portion comprises power electronics of the system or their related cooling flow path.

12. The method according to any of claims 5 to 11, further comprising monitoring a rate of change of temperature at one or more temperature sensors in the brake chopper resistor system.

13. The method according to claim 12, further comprising comparing the monitored rate of change of temperature with a threshold rate of change of temperature, preferably further comprising monitoring for the monitored rate of change of temperature exceeding the threshold rate of change of temperature for a predetermined time or over a temperature change of a predetermined magnitude.

14. A computer program product comprising instructions which, when executed by a computer processor, cause the computer processor to be configured to execute the method of any of claims 5 to 13.

15. A controller configured to carry out one or more of the steps of the methods of any of claims 5 to 13, wherein the controller is a hardware controller; or wherein the controller is a programmable controller comprising a processor, a memory, and one or more input and/or output ports, the memory comprising instructions which, when executed by the processor, cause the programmable controller to be configured to execute one or more of the methods of any of claims 5 to 13.
